# EUROPEAN PATENT APPLICATION

(11) **EP 4 588 646 A1**
(43) Date of publication of application: **23.07.2025**
(21) Application number: 25151925.2
(22) Date of filing: 15.01.2025
(51) Int. Cl.: B29C 65/10, B29C 65/50, B31B 50/81, B65B 9/20, B65B 51/20, B65B 59/04, B29C 65/36, B65B 51/22, B29K 23/00, B29K 705/02, B29K 711/12, B29L 9/00

(54) **APPARATUS FOR APPLYING A SEALING STRIP OF A HEAT-SEALABLE MATERIAL TO A WEB OF PACKAGING MATERIAL AND PACKAGING MACHINE FOR FORMING SEALED PACKAGES**

(30) Priority: 22.01.2024 IT 202400001107
(71) Applicant: Tetra Laval Holdings & Finance S.A., 1009 Pully (CH)
(72) Inventor: RICCO', Marco, 41123 Modena (IT); CASELLI, Riccardo, 41123 Modena (IT)
(74) Representative: Tetra Pak Patent Attorneys

(57) **Abstract**

There is described a strip application apparatus (12) for applying a sealing strip (13) of a heat-sealable material onto a web (4) of packaging material comprising an advancement device (18) configured to advance the sealing strip (13) towards and onto a longitudinal edge (4A) of the web (4) of packaging material, a strip sealing device (19) configured to seal a longitudinal portion (13A) of the sealing strip (13) to the longitudinal edge (4A) and a mobile frame (29) configured to support the strip sealing device (19) and to move between a production position, in which the strip sealing device (19) is arranged at the longitudinal edge (4A), and a maintenance position, in which the strip sealing device (19) is arranged at a distance from the longitudinal edge (4A).

## Description

### TECHNICAL FIELD

The present invention relates to an apparatus for applying a sealing strip of a heat-sealable material to a web of packaging material.

The present invention further relates to a packaging machine for forming sealed packages filled with a pourable product having an apparatus for applying a sealing strip of a heat-sealable material to a web of packaging material.

### BACKGROUND ART

As is known, many liquid or pourable food products, such as fruit juice, UHT (ultra-high-temperature treated) milk, wine, tomato sauce, etc., are sold in packages made of sterilized packaging material.

A typical example is the parallelepiped-shaped package for liquid or pourable food products known as Tetra Brik Aseptic (registered trademark), which is made by sealing and folding laminated strip packaging material. The packaging material has a multilayer structure comprising a base layer, e.g. of paper, covered on both sides with layers of heat-seal plastic material, e.g. polyethylene. In the case of aseptic packages for long-storage products, such as UHT milk, the packaging material also comprises a layer of oxygen-barrier material (an oxygen-barrier layer), e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging machines, which advance a web of packaging material through a sterilization apparatus for sterilizing the web of packaging material at a sterilization station and to an isolation chamber (a closed and sterile environment) in which the sterilized web of packaging material is maintained and advanced. During advancement of the web of packaging material through the isolation chamber, the web of packaging material is folded and sealed longitudinally at a tube forming station to form a tube having a longitudinal seam portion, the tube being further fed along a vertical advancing direction.

For completing the forming operations, the tube is filled with a pourable product, in particular a pourable food product, and is transversally sealed and subsequently cut along equally spaced transversal cross sections within a package forming apparatus of the packaging machine during advancement along the vertical advancing direction.

Pillow packages are so obtained, each pillow package has a longitudinal sealing band, a top transversal sealing band and a bottom transversal sealing band.

A typical packaging machine comprises a conveying device for advancing the web of packaging material, the sterilization apparatus for sterilizing the web of packaging material prior to its formation into the tube, a tube forming and sealing device configured to form the tube from the advancing web of packaging material and to longitudinally seal the tube, a filling device for filling the tube with the pourable product and the package forming apparatus adapted to form, transversally seal and cut individual packages from the tube of packaging material.

Furthermore, prior to folding and longitudinally sealing a sealing strip of heat-seal plastic material is applied and sealed onto a first longitudinal edge of the web of packaging material. The web of packaging material is folded such that the sealing strip is in contact with the inner side of the tube. Thus, the sealing strip gets into contact with the pourable product.

More specifically, the sealing strip is normally heat-sealed to the layer of heat-seal plastic material forming the inner face of the package at a pressing station to which the web of packaging material and the sealing strip, one or both heated beforehand, are fed along, respectively, the web advancement path and a strip advancement path, and where the sealing strip is pressed onto the first longitudinal edge of the web of packaging material. After application, the sealing strip has a first longitudinal portion heat-sealed to the first longitudinal edge of the web, and a second longitudinal portion projecting from the first longitudinal edge of the web.

During formation of the tube from the web of packaging material together with the sealed sealing strip, a second longitudinal edge of the web of packaging material opposite to the first longitudinal edge is laid on the outside of the first longitudinal edge with respect to the axis of the tube being formed. More specifically, the sealing strip is located entirely inside the tube, and the face of the second longitudinal edge facing the axis of the tube is superimposed partly on the second longitudinal portion of the sealing strip, and partly on the face of the first longitudinal edge located on the opposite side with respect to the first portion of the sealing strip.

The main scope of the sealing strip is to avoid that the first longitudinal edge of the web of packaging material gets into contact with the pourable product, as otherwise the packaging material would absorb the pourable product.

Additionally, the sealing strip prevents microorganisms possibly present on the first longitudinal edge of the web of packaging material from contaminating the pourable product packed in the package.

Furthermore, the sealing strip provides for improved strength and improved gas barrier properties of the seam portion. In order for the sealing strip to properly function, it is necessary to correctly position the sealing strip with respect to the web of packaging material.

The strip application apparatus comprises an advancement device adapted to advance the sealing strip along the strip advancement path and for placing the first longitudinal portion of the sealing strip onto the web of packaging material and a strip sealing device for sealing the sealing strip onto the web of packaging material. The strip sealing device further comprises a sealing head adapted to heat the web of packaging material and/or the sealing strip and pressure rollers for pressing the web of packaging material and the sealing strip at a pressuring station.

Even though the strip application apparatuses of the known type provide for good results and work satisfactorily well, a need is felt within the industry to further improve the operation of the strip application apparatuses, in particular when maintenance or cleaning operation are needed for the strip sealing device.

### DISCLOSURE OF INVENTION

It is therefore an object of the present invention to provide an apparatus for applying a sealing strip of a heat-sealable material to a web of packaging material addressing the drawbacks described above and, in particular, being easy and economical to be manufactured.

A further object of the present invention is to provide a packaging machine for forming sealed packages filled with a pourable product having an apparatus for applying a sealing strip of a heat-sealable material to a web of packaging material addressing the drawbacks described above and, in particular, being easy and economical to be manufactured.

According to the invention there are provided an apparatus for applying a sealing strip of a heat-sealable material to a web of packaging material and a packaging machine for forming sealed packages filled with a pourable product having an apparatus for applying a sealing strip of a heat-sealable material to a web of packaging material according to the appended claims.

### BRIEF DESCRIPTION OF THE DRAWINGS

A non-limiting embodiment of the present invention will be described by way of example with reference to the accompanying drawings, in which:
- figure 1 is a schematic view of a packaging machine having a strip application apparatus according to the present invention, with parts removed for clarity;
- figure 2 is a schematic and perspective view of a package obtained during operation of the packaging apparatus of Figure 1, with parts removed for clarity;
- figure 3 is a lateral view of a detail of a strip sealing device of the strip application apparatus of figure 1, with parts removed for clarity;
- figure 4 is a perspective view of the strip sealing device of figure 3 with parts removed for clarity;
- figure 5 is a perspective view of the strip application apparatus in a first operative position with parts removed for clarity; and
- figure 6 is a perspective view of the strip application apparatus in a second maintenance position with parts removed for clarity.

### BEST MODES FOR CARRYING OUT THE INVENTION

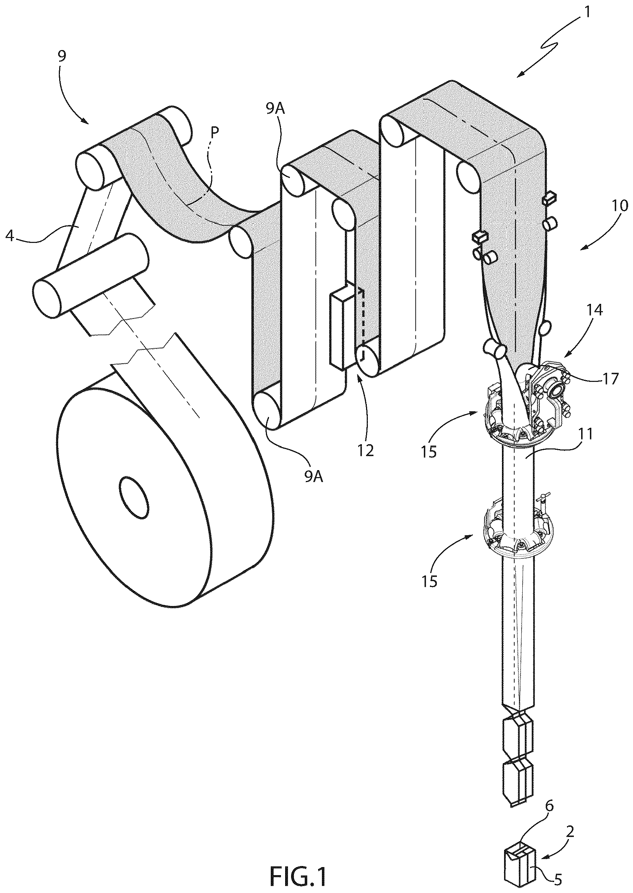

Number 1 in figure 1 indicates as a whole a packaging machine for packaging pourable products, in particular pourable food products, such as milk, cream, yoghurt drinks, yoghurt, fruit juice, wine, tomato sauce, sugar, salt, emulsions, solutions containing solid particles (e.g. legumes), etc., into packages 2.

Advantageously, the packages 2 are formed from a multilayer packaging material. The multilayer packaging material comprises at least a layer of fibrous material, such as e.g. a paper or cardboard layer, and at least two layers of heat-seal plastic material, e.g. polyethylene, interposing the layer of fibrous material in between one another. One of these two layers of heat-seal plastic material defines an inner surface 3 of the packages 2 contacting the pourable product packaged within the packages 2.

According to some possible non-limiting embodiments, the multilayer packaging material comprises a layer of gas- and light-barrier material, e.g. aluminum foil or ethylene vinyl alcohol (EVOH) film, in particular being arranged between one of the layers of heat-seal plastic material and the layer of fibrous material. Preferentially, the multilayer packaging material also comprises a further layer of heat-seal plastic material being interposed between the layer of gas- and light-barrier material and the layer of fibrous material. Preferentially, the multilayer packaging material is provided as an endless web 4 of packaging material.

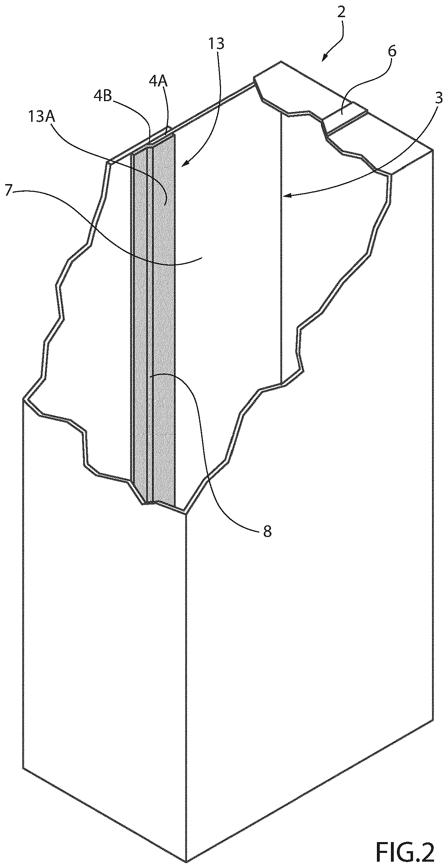

With particular reference to figures 1 and 2, each package 2 comprises a longitudinal seam portion 5 and a pair of transversal seal portions 6, in particular a top transversal seal portion and a bottom transversal seal portion (i.e., one transversal seal portion 6 at an upper end of the package 2 and another transversal seal portion 6 at a lower end of the package 2).

Within each package 2, an inner space 7 containing the pourable product is defined and delimited by the inner surface 3. In other words, the inner surface 3 faces the inner space 7 and is in contact with the pourable product.

Each package 2 comprises a sealing strip section 8 sealed and/or heat-fused onto the inner surface 3 and extending (substantially) parallel to the respective longitudinal seam portion 5.

With particular reference to figures 1 and 2, the packaging machine 1 comprises:
- a conveying apparatus 9 for advancing the web 4 of packaging material along a web conveying path P through guiding elements, in particular through a number of rollers 9A, to a tube forming and sealing unit 10, configured to gradually fold the web 4 of packaging material into a tube 11, preferentially by overlapping opposite longitudinal edges of the web 4 of packaging material with one another, and longitudinally sealing the tube 11;
- a strip application apparatus 12 for applying a sealing strip 13 of a heat-sealable material, in particular a heat-sealable plastic material, onto a longitudinal edge of the web 4 of packaging material (the sealing strip section 8 of each package 2 being formed by a portion of the sealing strip 13);
- a filling device 14 for filling the tube 11 with the pourable product; and
- a package forming unit (not shown) arranged along the web conveying path P downstream of the tube forming and sealing unit 10 and configured to form, transversally seal and cut the advancing tube 11 for forming the packages 2.

The strip application apparatus 12 is arranged upstream of the tube forming and sealing unit 10 along the web conveying path P. Preferentially, the packaging machine 1 also comprises a sterilizing unit (not shown) to sterilize the advancing web 4 of packaging material.

More in detail, the web 4 of packaging material comprises a longitudinal edge 4A and a further longitudinal edge 4B spaced apart from the longitudinal edge 4A. In particular, the longitudinal edge 4A and the further longitudinal edge 4B are spaced apart along a transversal axis of the web 4 of packaging material. Furthermore, the tube forming and sealing unit 10 is configured to overlap the longitudinal edge 4A and the further longitudinal edge 4B with one another. As will be described in more detail further below, overlapping of the longitudinal edge 4A and the further longitudinal edge 4B occurs with the sealing strip 13 having been sealed and/or heat-fused to the longitudinal edge 4A.

Preferentially, the tube forming and sealing unit 10 comprises at least two forming ring assemblies 15 configured to fold in cooperation with one another the web 4 of packaging material gradually into the tube 11. Furthermore, the tube forming and sealing unit 10 comprises a longitudinal sealing device (not shown) being configured to longitudinally seal the tube 11 along the longitudinal seam portion 5. In particular, the longitudinal sealing device may be of the kind operating by means of induction heating or by a stream of a hot fluid or by means of ultrasound. The longitudinal sealing device comprises a sealing head at least partially interposed between the forming ring assemblies 15.

The filling device 14 comprises a filling pipe 17 in fluid connection with a pourable product storage tank (not shown) for storing/providing for the pourable product to be packaged. The filling pipe 17 is at least partially arranged within the tube 11 and is configured to direct, in use, the pourable product into the tube 11.

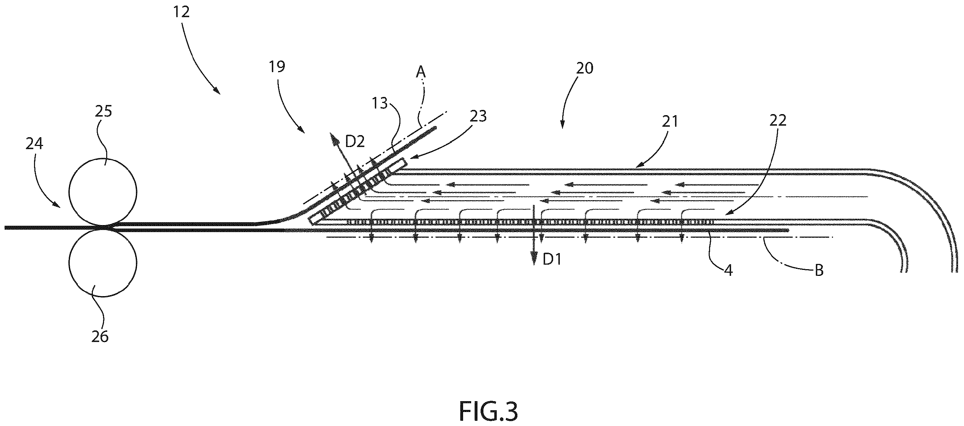

With particular reference to figures 3 to 6, the strip application apparatus 12 comprises:
- an advancement device 18 configured to advance the sealing strip 13 towards and onto the web 4 of packaging material, in particular towards and onto the longitudinal edge 4A;
- a strip sealing device 19 configured to seal the sealing strip 13, in particular a longitudinal portion 13A of the sealing strip 13, to the web 4 of packaging material, in particular to the longitudinal edge 4A.

The strip sealing device 19 is configured to seal the sealing strip 13, in particular the longitudinal portion 13A, to the web 4 of packaging material, in particular to the longitudinal edge 4A, by heating the web 4 of packaging material, in particular the longitudinal edge 4A, and/or by heating the sealing strip 13, in particular the longitudinal portion 13A. The strip sealing device 19 is further configured to press the web 4 of packaging material, in particular the longitudinal edge 4A, and the sealing strip 13, in particular the longitudinal portion 13A, against one another.

More in detail, the strip sealing device 19 can be of any kind suitable to heat the sealing strip 13 and/or the web 4 of packaging material. The strip sealing device 19 can be of the type generating heat by means of induction or by means of a hot fluid, such as hot air.

According to a first embodiment (not shown), the strip sealing device 19 comprises a sealing head configured to heat by means of induction the sealing strip 13 and/or the web 4 of packaging material.

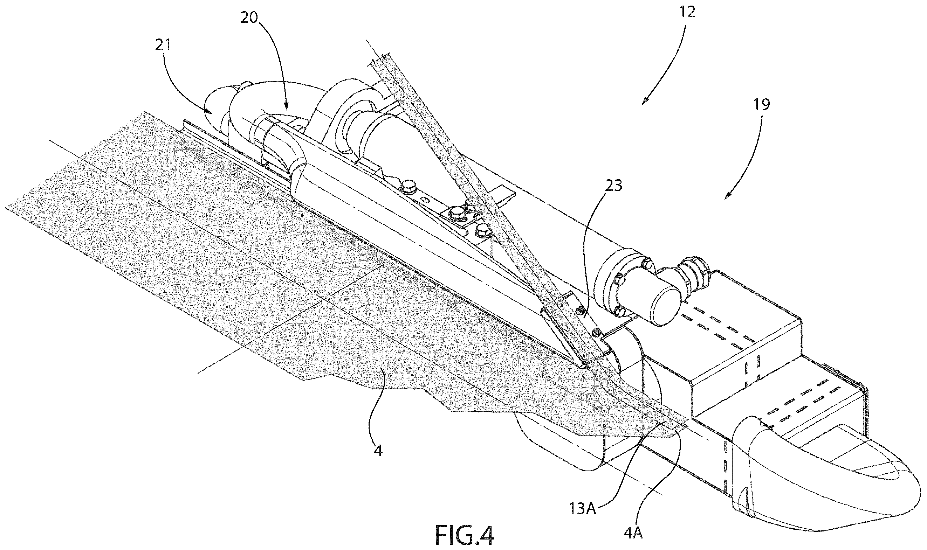

According to a second embodiment shown in figures 3 and 4, the strip sealing device 19 comprises a heat distribution device 20 configured to direct a stream of a heated fluid, in particular a stream of heated air, onto the web 4 of packaging material, in particular onto the longitudinal edge 4A, and/or onto the sealing strip 13, in particular onto the longitudinal portion 13A.

More in detail, the heat distribution device 20 is configured to direct a first stream of heated fluid onto the web 4 of packaging material, in particular onto the longitudinal edge 4A, and/or a second stream of heated fluid onto the sealing strip 13, in particular onto the longitudinal portion 13A.

The first stream of heated fluid is directed on an application face of the web 4 of packaging material that defines the inner surface 3 and the second stream of heated fluid is directed onto a face of the sealing strip 13 that is put into contact with the application face of the web 4 of packaging material.

The heat distribution device 20 comprises a heating device (not shown) configured to create a flow of heated fluid, and a distribution nozzle 21 having one or more outlet openings and being fluidically connected to the heating device so as to receive the flow of heated fluid and to expel the first stream of heated fluid and the second stream of heated fluid through the one or more outlet openings.

The distribution nozzle 21 comprises a main portion 22 comprising a first plurality of outlet openings and an auxiliary portion 23 connected to the main portion 22 and having a second plurality of outlet openings. In particular, the main portion 22 extends along a longitudinal axis B. The main portion 22 and/or the longitudinal axis B are arranged parallel to the web 4 of packaging material (while the web 4 of packaging material advances, in use, along the heat distribution device 20).

The auxiliary portion 23 extends along a longitudinal axis A. The auxiliary portion 23 and/or the longitudinal axis A are arranged parallel to the sealing strip 13 (while the sealing strip 13 advances, in use, along the heat distribution device 20).

Advantageously, the first plurality of outlet openings is configured to direct the first stream of heated fluid along a first direction Dl, and the second plurality of outlet openings is configured to direct the second stream of heated fluid along a second direction D2. In particular, the first plurality of outlet openings and the second plurality of outlet openings are arranged such that the second direction D2 is transversal to the first direction D1.

The strip sealing device 19 comprises a pressing assembly 24 configured to press the web 4 of packaging material, in particular the longitudinal edge 4A, and/or the sealing strip 13, in particular the longitudinal portion 13A, towards and against one another. The pressing assembly 24 comprises a main roller 25 and an auxiliary counter roller 26. In use, the web 4 of packaging material, in particular the longitudinal edge 4A, and the sealing strip 13, in particular the longitudinal portion 13A, are superimposed to one another and interposed between the main roller 25 and the auxiliary counter roller 26 for guaranteeing a secure sealing of the sealing strip 13, in particular of the longitudinal portion 13A, to the web 4 of packaging material, in particular to the longitudinal edge 4A.

The advancement device 18 is configured to advance, in particular in a continuous manner, the sealing strip 13 from a storing station to the strip sealing device 19. More in detail, the advancement device 18 comprises a magazine unit (not shown) arranged at the storing station and an advancement group 27 for advancing the sealing strip 13. The magazine unit comprises at least a support reel (not shown) to carry the sealing strip 13 in a wound-up manner and being rotatable around an axis. The sealing strip 13 is unwound from the support reel and fed to the strip sealing device 19 through the advancement group 27. When unwound from the reel, the sealing strip 13 has the shape of a continuous planar web.

The advancement group 27 comprises a number of guide rollers 28 configured to guide the sealing strip 13 to the strip sealing device 19. Advantageously, the advancement device 18 comprises a support panel (not shown) for supporting the magazine unit and at least partly the advancement group 27.

The strip application apparatus 12 comprises a mobile frame 29 for supporting the strip sealing device 19. In particular, the mobile frame 19 comprises an upper crossbar 30A and a lower crossbar 30B connected by at least a lateral upright 31. The strip sealing device 19 is connected to the lateral upright 31. More in detail, the strip sealing device 19 is connected to the lateral upright 31 in a fixed manner.

The packaging machine 1 comprises a sealing chamber SC delimiting an inner environment IE from an outer environment OE. In use, during normal operation of the packaging machine 1, the strip application apparatus 12 is at least partially arranged within the sealing chamber SC. Preferably, the strip application apparatus 12 is entirely arranged within the sealing chamber SC. More in detail, when in use, during normal operation of the packaging machine 1, the strip application apparatus 12 is at least partially arranged within the inner environment IE. Preferably, when in use, during normal operation of the packaging machine 1, the strip application apparatus 12 is entirely arranged within the inner environment IE.

The sealing chamber SC is enclosed by a fixed structure 33 comprising at least one fixed rail, in particular an upper fixed rail (not shown) and a lower fixed rail 32, on which the mobile frame 29 slides. In other words, the mobile frame 29 for supporting the strip sealing device 19 is configured to slide on the upper fixed rail and the lower fixed rail 32 between two end positions. The mobile frame 29 is movable indeed along a direction T from a production position to a maintenance position, and vice versa from a maintenance position to a production position.

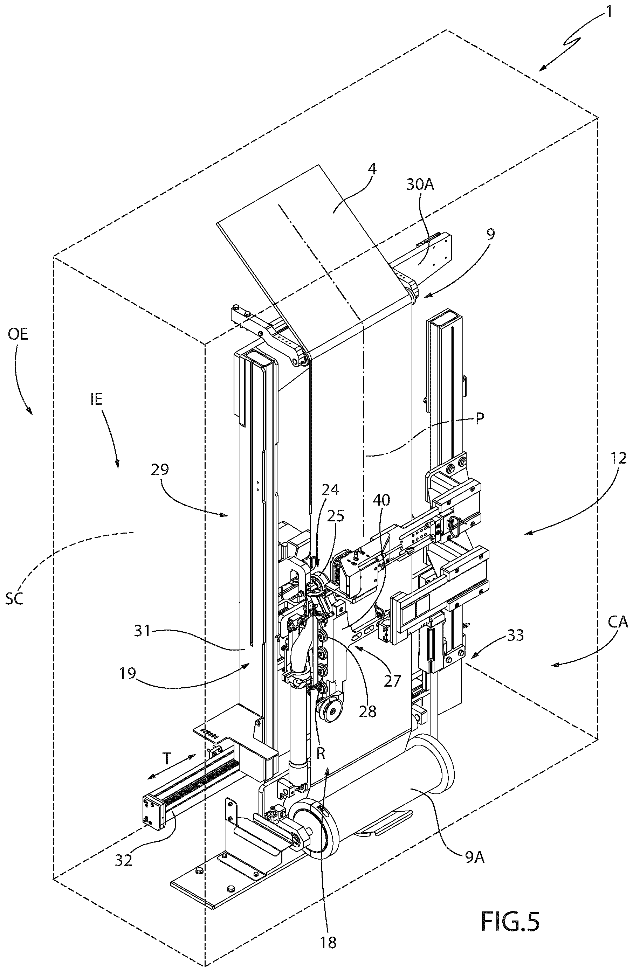

The production position is disclosed in figure 5 and corresponds to the position in which the sealing strip 13, in particular the longitudinal portion 13A, is applied onto the web 4 of packaging material, in particular onto the longitudinal edge 4A, during normal operation of the packaging machine 1. In the production position the strip sealing device 19 is arranged in the area of the web 4 of packaging material. In particular, in the production position the strip sealing device 19 is arranged at the web 4 of packaging material. Advantageously, in the production position, the sealing strip 13, in particular the longitudinal portion 13A, and the web 4 of packaging material, in particular the longitudinal edge 4A are mutually superimposed and interposed between the main roller 25 and the auxiliary counter roller 26.

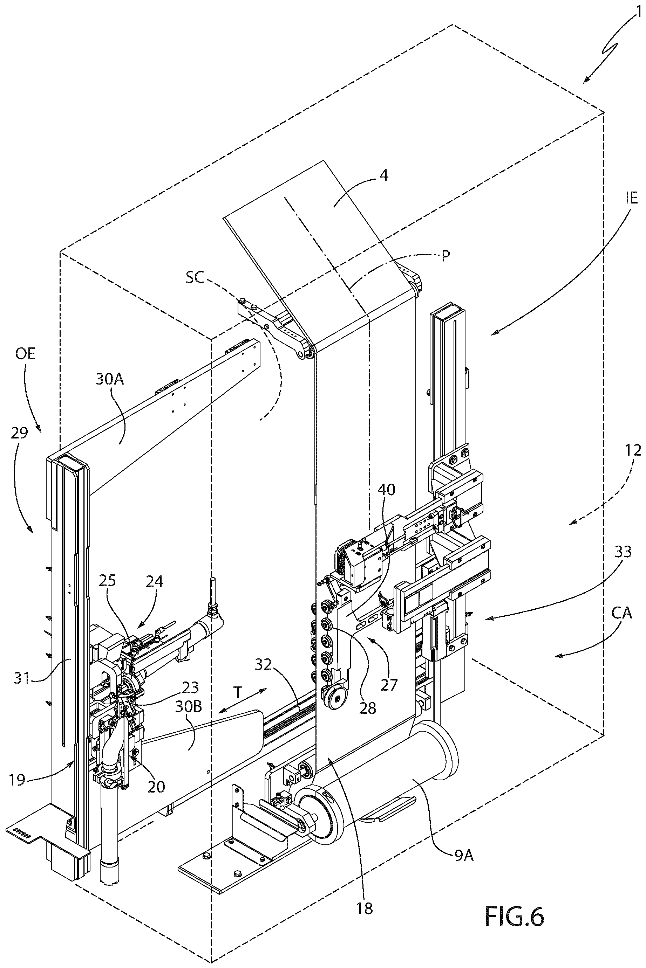

The maintenance position is disclosed in figure 6 and corresponds to the position in which an operator can access the strip sealing device 19 and the strip sealing device 19 is arranged at a distance from the web 4 of packaging material. In the maintenance position, the sealing strip 13, in particular the longitudinal portion 13A, cannot be applied onto the web 4 of packaging material, in particular onto the longitudinal edge 4A.

The advancement device 18 (particularly the magazine unit and the advancement group 27 for advancing the sealing strip 13) are not arranged on the mobile frame 29.

In the production position, the mobile frame 29 is arranged within the sealing chamber SC. In particular, in the production position, the mobile frame 29 is entirely arranged within the sealing chamber SC. In the production position, the mobile frame 29 is arranged within the inner environment IE. In particular, in the production position, the mobile frame 29 is entirely arranged within the inner environment IE.

In the maintenance position, the mobile frame 29 is arranged outside the sealing chamber SC. In particular, in the production position, the mobile frame 29 is at least partially arranged outside the sealing chamber SC. Even more in particular, in the production position, the mobile frame 29 is entirely arranged outside the sealing chamber SC. In the maintenance position, the mobile frame 29 is arranged within the outer environment OE. In particular, in the maintenance position, the mobile frame 29 is entirely arranged within the outer environment OE. In the maintenance position, an operator can easily have access to the strip sealing device 19 for maintenance operations.

In use, the packaging machine 1 produces packages 2 filled with the pourable product and operation of packaging machine 1 comprises the steps of:
- checking whether the mobile frame 29 is in the operation position and/or moving the mobile frame 29 to the operation position;
- conveying, in particular by conveying apparatus 9, the web 4 of packaging material along the web conveying path P;
- applying the sealing strip 13, in particular the longitudinal portion 13A, onto the web 4 of packaging material, in particular onto the longitudinal edge 4A;
- gradually folding the web 4 of packaging material into the tube 11 by overlapping the longitudinal edge 4A and the further longitudinal edge 4B with one another, and longitudinally sealing the tube 11;
- filling the tube 11 with the pourable product; and
- forming the packages 2 from the tube 11, in particular by shaping the tube 11 and transversally sealing and cutting the tube 11.
In more detail, the step of applying the sealing strip 13 comprises the sub-steps of:
- advancing the web 4 of packaging material to the strip sealing device 19 along the web conveying path P;
- advancing the sealing strip 13 from the magazine unit to the strip sealing device 19 through the advancement group 27 and along a strip conveying path R;
- heating the web 4 of packaging material, in particular the longitudinal edge 4A, and/or the sealing strip 13, in particular the longitudinal portion 13A; and
- attaching the sealing strip 13, in particular the longitudinal portion 13A, onto the web 4 of packaging material, in particular onto the longitudinal edge 4A through the pressing assembly 24.
When an operator has to carry out maintenance operations on the strip sealing device 19, the packaging machine 1 is stopped and the production of packages 2 is interrupted; successively the mobile frame 29 is moved from the operation position to the maintenance position by sliding on the upper fixed rail and the lower fixed rail 32 such that the operator can access the strip sealing device 19. When the maintenance operations have been completed, the mobile frame 29 is moved back from the maintenance position to the operation position by sliding on the upper fixed rail and the lower fixed rail 32 and the production of packages 2 can be resumed.

The strip application apparatus 12 described above has some advantages, in particular the mobile frame 29 configured to support the strip sealing device 19 and movable between the production position and the maintenance position enables to considerably simplify operation of the strip application apparatus 12, in particular when maintenance or cleaning of the strip sealing device 19 are needed.

### LIST OF REFERENCE NUMERALS

- 1: packaging machine
- 2: packages
- 3: inner surface
- 4: web of packaging material
- 4A: longitudinal edge
- 4B: further longitudinal edge
- 5: longitudinal seam portion
- 6: transversal seam portion
- 7: inner space
- 8: sealing strip section
- 9: conveying apparatus
- 9A: roller
- 10: tube forming and sealing unit
- 11: tube
- 12: strip application apparatus
- 13: sealing strip
- 13A: longitudinal portion
- 14: filling device
- 15: forming ring assembly
- 17: filling pipe
- 18: advancement device
- 19: strip sealing device
- 20: heat distribution device
- 21: distribution nozzle
- 22: main portion
- 23: auxiliary portion
- 24: pressing assembly
- 25: main roller
- 26: auxiliary counter roller
- 27: advancement group
- 28: guide rollers
- 29: mobile frame
- 30A: upper crossbar
- 30B: lower crossbar
- 31: lateral upright
- 32: lower fixed rail
- 33: fixed structure
- P: web conveying path
- A: longitudinal axis
- B: longitudinal axis
- D1: first direction
- D2: second direction
- R: strip conveying path
- SC: sealing chamber
- IE: inner environment
- OE: outer environment
- T: direction

## Claims

1. A strip application apparatus (12) for applying a sealing strip (13) of a heat-sealable material onto a web (4) of packaging material comprising:
- an advancement device (18) configured to advance the sealing strip (13) towards and onto a longitudinal edge (4A) of the web (4) of packaging material;
- a strip sealing device (19) configured to seal a longitudinal portion (13A) of the sealing strip (13) to the longitudinal edge (4A); and
- a mobile frame (29) configured to support the strip sealing device (19) and movable between a production position and a maintenance position;
wherein, the strip sealing device (19) is arranged at the longitudinal edge (4A) in the production position and is arranged at a distance from the longitudinal edge (4A) in the maintenance position.

2. A strip application apparatus according to claim 1, and further comprising a sealing chamber (SC) delimiting an inner environment (IE) from an outer environment (OE); wherein, the mobile frame (29) is arranged within the sealing chamber (SC) in the production position and outside the sealing chamber (SC) in the maintenance position.

3. A strip application apparatus according to claim 1 or 2, and further comprising a fixed structure (33) enclosing the sealing chamber (SC) and comprising at least one fixed rail (32) on which the mobile frame (29) slides.

4. A strip application apparatus according to claim 3, wherein the fixed structure comprises an upper fixed rail and a lower fixed rail (32) and the mobile frame (19) comprises an upper crossbar (30A) and a lower crossbar (30B) configured to slide, respectively, on the upper fixed rail and the lower fixed rails (32), the upper crossbar (30A) and the lower crossbar (30B) being connected to one another by at least a lateral upright (31); wherein the strip sealing device (19) is connected to the lateral upright (31).

5. A strip application apparatus according to any previous claim, and further comprising a pressing assembly (24) configured to press the longitudinal edge (4A) and the longitudinal portion (13A) against one another; wherein, the pressing assembly (24) comprises a main roller (25) and an auxiliary counter roller (26); and wherein the longitudinal edge (4A) and the longitudinal portion (13A) are mutually superimposed and interposed between the main rollers (25) and the auxiliary counter roller (26) when the mobile frame (29) is in the production position.

6. A strip application apparatus according to any previous claims, wherein the advancement device (18) comprises a magazine unit for storing the sealing strip (13) and an advancement group (27) comprising a number of guide rollers (28) configured to guide the sealing strip (13) to the strip sealing device (19).

7. A strip application apparatus according to any previous claims, wherein the strip sealing device (19) is configured to heat the longitudinal portion (13A) and/or the longitudinal edge (4A) by means of a stream of a heated fluid, in particular a stream of heated air, or by means of induction.

8. A packaging machine (1) for packaging a pourable product into packages (2) obtained from a web (4) of packaging material, the packaging machine (1) comprising a strip application apparatus (12) according to any one of the claims from 1 to 7.

9. A packaging machine according to claim 8, and further comprising:
- a conveying apparatus (9) for advancing the web 4 of packaging material along a web conveying path (P);
- a tube forming and sealing unit (10) configured to gradually fold the web (4) of packaging material into a tube (11) and longitudinally sealing the tube (11); and
- a filling device (14) for filling the tube (11) with the pourable product.
